# FASCICULE DE BREVET EUROPEEN

(11) **EP 3 962 844 B1**
(45) Date de publication et mention de la délivrance du brevet: **17.07.2024**
(21) Numéro de dépôt: 20726304.7
(22) Date de dépôt: 30.04.2020
(51) Int. Cl.: B65G 69/34, B65G 69/00, B60T 3/00

(54) **DISPOSITIF DE BLOCAGE D'UN VEHICULE DEVANT UN QUAI DE CHARGEMENT**
VORRICHTUNG ZUM BLOCKIEREN EINES FAHRZEUGS VOR EINER LADEBRÜCKE
DEVICE FOR BLOCKING A VEHICLE IN FRONT OF A LOADING DOCK

(30) Priorité: 30.04.2019 FR 1904589
(43) Date de publication de la demande: 09.03.2022
(73) Titulaire: A.S.A. Fermetures, 64230 Lescar (FR)
(72) Inventeur: BELLOTA, Ignace, 64110 LAROIN (FR)
(74) Mandataire: Aquinov
(86) Numéro de dépôt international: PCT/EP2020/062096
(87) Numéro de publication internationale: WO 2020/221887

(56) Documents cités:
- WO-A1-96/12665
- WO-A1-96/12665
- FR-A1- 3 039 528
- FR-A1- 3 039 528
- FR-A1- 3 066 187
- FR-A1- 3 066 187

## Description

L'invention concerne un dispositif de blocage d'un véhicule devant un quai de chargement, dans une voie d'accostage.

On connaît les problèmes déjà soulevés dans les demandes de brevet précédentes au nom du même demandeur concernant les immobilisations des véhicules, devant un quai de chargement et dans une voie d'accostage, notamment des poids lourds devant des quais de chargement/déchargement. En effet, il est nécessaire de pouvoir immobiliser les véhicules devant les quais de chargement afin d'éviter tout accident lié à un éventuel démarrage intempestif du véhicule par exemple lors du passage d'un piéton ou lorsque le cariste effectue encore des chargements. C'est ainsi que le brevet français FR 2.957.068 vise un dispositif de calage à quai d'un véhicule comprenant une cale arrière prévue pour constituer une butée au dernier train de roues d'un véhicule, cette cale étant montée dans un support horizontal et pouvant prendre deux positions, l'une en saillie devant ledit train de roues et une position d'effacement. Le positionnement de ladite cale devant le train de roues s'effectue par une translation le long d'un support fixé au sol et monté parallèle à l'axe de circulation du véhicule à immobiliser. Un verrouillage assure l'immobilisation en translation, simultanément à la mise en saillie de la cale. Un autre brevet FR 3.039.528 décrit un dispositif selon le préambule de la revendication 1 pour l'immobilisation d'un véhicule tel qu'une remorque devant un quai de chargement, comprenant une structure fixe, comportant un rail fixé au sol, et une structure mobile comprenant un chariot mobile en translation sur ledit rail, des moyens de manoeuvre dudit chariot par rapport audit rail, des moyens de détection, mécaniques et des moyens d'immobilisation d'au moins une roue dudit véhicule par un bras pivotant et un ensemble d'un doigt et d'un rouleau, cylindriques, solidarisés par une génératrice. Ces dispositifs donnent parfaite satisfaction mais les demandes de la part des exploitants sont de plus en plus complètes et nécessitent de répondre aux problèmes supplémentaires, rencontrés en exploitation.

Le problème qui se pose est de pouvoir immobiliser le véhicule de façon adaptée et certaine devant le quai une fois le véhicule positionné et surtout de ne pas permettre un démarrage intempestif du véhicule, même en force, mais le but est aussi de ne pas dégrader le dispositif de blocage lors de la mise en place du véhicule lorsque le protocole de manoeuvre devant le quai n'est pas respecté par le chauffeur dudit véhicule par exemple. En effet, par inattention, par incapacité, certains chauffeurs n'appliquent pas les consignes or les véhicules, lorsqu'il s'agit d'une semi-remorque chargée de 30 tonnes de produits dont le tracteur est équipé d'un moteur de plusieurs centaines de chevaux, l'ensemble présente un fort potentiel de dégradation lorsque lesdits véhicules sont manoeuvrés de façon inadéquate.

Le but de la présente invention est de proposer un dispositif qui répond à toutes les problématiques et notamment qui permet de ne pas subir de destruction lors de certaines manoeuvres erronées. Le dispositif vise aussi à être mis en oeuvre de façon extrêmement simple et aisée pour les utilisateurs et parfaitement visible pour les chauffeurs des véhicules.

A cet effet, le dispositif selon l'invention concerne un dispositif de blocage d'un véhicule devant un quai de chargement dans une voie d'accostage selon la revendication 1.

Plus particulièrement, la tête de blocage comprend un bras de blocage monté mobile en translation dans un fourreau, tous deux orientés perpendiculairement au bâti et des moyens de manoeuvre assurant les déplacements en translation du bras de blocage dans ledit fourreau. Ce bras de blocage comprend un pied béquille, solidaire de l'extrémité dudit bras de blocage et orienté verticalement, destiné à reposer sur le sol de la voie d'accostage.

Avantageusement, le moyen de détection est agencé pour détecter l'arrière d'une roue du véhicule. De façon spécifique, selon la présente invention, le moyen de détection est une tête de positionnement qui comprend un axe central, un bras de positionnement monté pivotant autour dudit axe central, des moyens de rappel angulaire dudit bras de positionnement perpendiculairement à la voie d'accostage, et une came disposée en partie supérieure dudit axe central avec un secteur angulaire ainsi qu'un capteur. Les moyens de rappel angulaire du bras de positionnement comprennent un ressort à spires pris entre une butée traversée elle-même par une tige traversante, muni d'un écrou de réglage à une extrémité au-delà de ladite butée, l'autre extrémité de la tige étant retenue par un boulon passant dans un trou ménagé dans une gorge de l'axe central. Ladite came comprend par ailleurs des moyens de rappel angulaire comprenant une tige et un ressort monté à sa périphérie et venant sur une butée solidaire du châssis d'un côté et sur une butée solidaire de la tige au moyen d'un écrou de réglage de la tension dudit ressort. On comprend que le capteur est un détecteur de la position angulaire du bras de positionnement, et que, par exemple, lorsque cette position angulaire dépasse un seuil donné, la tête de positionnement détecte le passage de l'arrière d'une roue du véhicule.

En variante, le moyen de détection pourra par exemple comporte un détecteur optique, par exemple pourvu d'un émetteur d'un faisceau lumineux, par exemple laser ou infrarouge, associé à un récepteur de ce faisceau, par exemple une cellule photoélectrique ou une photodiode. Le détecteur optique pourra par exemple être un capteur de type « temps de vol », également appelé TOF (de l'anglais Time Of Flight). On comprend ainsi que lorsque le détecteur optique détecte le passage d'un objet devant lui, notamment pendant une durée donnée, par exemple de 1 seconde, le capteur optique détecte le passage de l'arrière d'une roue du véhicule.

De façon non limitative, selon la présente invention, le dispositif de blocage comprend des moyens de compensation comportant un ressort et une tige traversante munie d'un galet en partie inférieure, destiné à coopérer avec le châssis.

Dans un exemple de réalisation de l'invention, la tête de blocage comporte un bras de blocage monté mobile sur le châssis entre une position d'attente et une position de blocage et des moyens de manoeuvre agencé pour déplacer le bras de blocage vers la position d'attente ou la position de blocage, et le moyen de détection est agencé pour détecter l'arrière d'une roue du véhicule. Par exemple, le moyen de détection est une tête de positionnement comportant un bras de positionnement monté mobile en rotation sur le châssis et un détecteur de la position angulaire du bras de positionnement. En variante, le moyen de détection comporte un détecteur optique. Avantageusement, le dispositif comporte une unité de contrôle agencée pour contrôler les moyens de manoeuvre du bras de blocage de sorte à entraîner un déplacement du bras de blocage, notamment de la position d'attente vers la position de blocage, en fonction, directement ou indirectement, de la détection de l'arrière de ladite roue dudit véhicule par le moyen de détection, notamment en fonction de la position angulaire du bras de positionnement détectée par le détecteur ou en fonction de la détection d'un objet par le détecteur optique. Par exemple, dans le cas d'une tête de positionnement, le détecteur de la position angulaire pourra comporter un capteur optique agencé pour détecter le passage d'un secteur angulaire en saillie d'une came solidaire du bras de positionnement. L'unité de contrôle peut par exemple être agencée pour entraîner un déplacement du bras de blocage de la position d'attente vers la position de blocage à la suite d'une détection par le détecteur du franchissement du bras de positionnement d'une position angulaire prédéterminée, par exemple lorsque le capteur optique cesse de détecter le secteur angulaire en saillie. En variante, dans le cas d'un détecteur optique, le détecteur optique pourra être agencé pour mesurer la durée de la détection d'un objet par le détecteur optique, le détecteur optique détectant l'arrière d'une roue lorsque cette durée excède un seuil donné, par exemple d'une seconde. L'unité de contrôle peut par exemple être agencée pour entraîner un déplacement du bras de blocage de la position d'attente vers la position de blocage à la suite d'une durée de détection par le détecteur optique excédant ledit seuil donné.

Avantageusement, l'unité de contrôle peut être agencée pour contrôler les moyens de manoeuvre du module de blocage pour entraîner un déplacement du module de blocage dans un sens donné, par exemple vers l'extérieur du quai de chargement, de sorte que l'arrière d'une roue du véhicule puisse être détecté par le moyen de détection, par exemple pour que l'arrière de ladite roue du véhicule vienne en contact avec le bras de positionnement pour entraîner ce dernier en rotation ou en variante pour que l'arrière de ladite roue du véhicule passe devant le détecteur optique. Le cas échéant, l'unité de contrôle est notamment agencée pour contrôler les moyens de manoeuvre du module de blocage pour entraîner un déplacement du module de blocage dans un sens opposé, par exemple vers l'intérieur du quai de chargement, en fonction de la détection de l'arrière de la roue dudit véhicule par le moyen de détection, et notamment avant, pendant ou après le déplacement du bras de blocage vers la position de blocage.

Selon l'invention, le dispositif comporte un capteur optique supporté par le châssis entre la tête de blocage et le moyen de détection et agencé pour détecter l'avant de ladite roue dudit véhicule. Il pourra par exemple s'agir d'un émetteur d'un faisceau lumineux, par exemple laser ou infrarouge, associé à un récepteur de ce faisceau, par exemple une cellule photoélectrique ou une photodiode. Le capteur optique pourra par exemple être un capteur de type « temps de vol », également appelé TOF (de l'anglais Time Of Flight). Ce capteur optique permet notamment de placer avec précision le module de blocage et le bras de blocage au plus près de la roue du véhicule, quelle que soit la largeur de cette roue.

Le cas échéant, l'unité de contrôle peut être agencée pour contrôler les moyens de manoeuvre du bras de blocage de sorte à entraîner un déplacement du bras de blocage de la position d'attente vers la position de blocage en fonction, directement ou indirectement, de façon séquentielle ou cumulative, de la détection de l'arrière de ladite roue dudit véhicule par le moyen de détection et de la détection de l'avant de ladite roue dudit véhicule par le capteur optique.

Selon un exemple, lors de l'accostage du véhicule, l'unité de contrôle est agencée pour contrôler les moyens de manoeuvre du module de blocage pour entraîner un déplacement du module de blocage dans un sens donné, puis en fonction de la détection de l'arrière de ladite roue dudit véhicule par le moyen de détection, pour contrôler ces moyens de manoeuvre pour entraîner un déplacement du module de blocage dans un sens opposé, puis pour contrôler les moyens de manoeuvre du bras de blocage de sorte à entraîner un déplacement du bras de blocage de la position d'attente vers la position de blocage à la suite de la détection de l'avant de ladite roue dudit véhicule par le capteur optique. Le déclenchement de cette séquence pourra être réalisé manuellement, via une interface de contrôle, ou automatiquement, suite à la détection de l'accostage du véhicule par des moyens connus.

Si on le souhaite, l'unité de contrôle pourra être agencée pour contrôler les moyens de manoeuvre du bras de blocage de sorte à entraîner un déplacement du bras de blocage de la position d'attente vers la position de blocage à la suite de la détection d'une roue dudit véhicule par le capteur optique pendant au moins une durée prédéterminée, par exemple de 0.5s. De préférence, l'unité de contrôle pourra être agencée pour contrôler les moyens de manoeuvre du bras de blocage de sorte à entraîner un déplacement du bras de blocage de la position d'attente vers la position de blocage à la suite d'une absence de détection par le capteur optique suivie d'une détection d'une roue dudit véhicule par le capteur optique pendant au moins une durée prédéterminée. Ces caractéristiques permettent notamment d'éviter les fausses détections, ou d'éviter de détecter une bavette de protection d'une roue ou encore de prendre en compte le cas d'un camion présentant deux roues rapprochées, tous ces cas pouvant entraîner une erreur de positionnement du bras de blocage.

La présente invention est maintenant décrite à l'aide d'exemples uniquement illustratifs et nullement limitatifs de la portée de l'invention, et à partir des illustrations jointes, dans lesquelles :
[Fig. 1A] représente une vue en perspective à partir de l'avant, côté intérieur de la voie d'accostage, du dispositif de blocage d'un véhicule par bras mobile selon la présente invention.
[Fig. 1B] représente une vue de dessus du dispositif de la figure 1A.
[Fig. 1C] représente une vue en perspective à partir de l'arrière, côté intérieur de la voie d'accostage, du dispositif de blocage d'un véhicule par bras mobile selon la présente invention.
[Fig. 2A] représente une vue en perspective de détail du bras de positionnement.
[Fig. 2B] représente une vue de dessus de détail du bras de positionnement.
[Fig. 2C] représente une vue en perspective éclatée du bras de positionnement.
[Fig. 3] représente une vue de détail d'un compensateur d'horizontalité pour le bras de blocage.
[Fig. 4A] représente une vue de la première étape d'un synoptique de fonctionnement.
[Fig. 4B] représente une vue de la deuxième étape du synoptique de fonctionnement.
[Fig. 4C] représente une vue de la troisième étape du synoptique de fonctionnement.
[Fig. 4D] représente une vue de la quatrième étape du synoptique de fonctionnement.

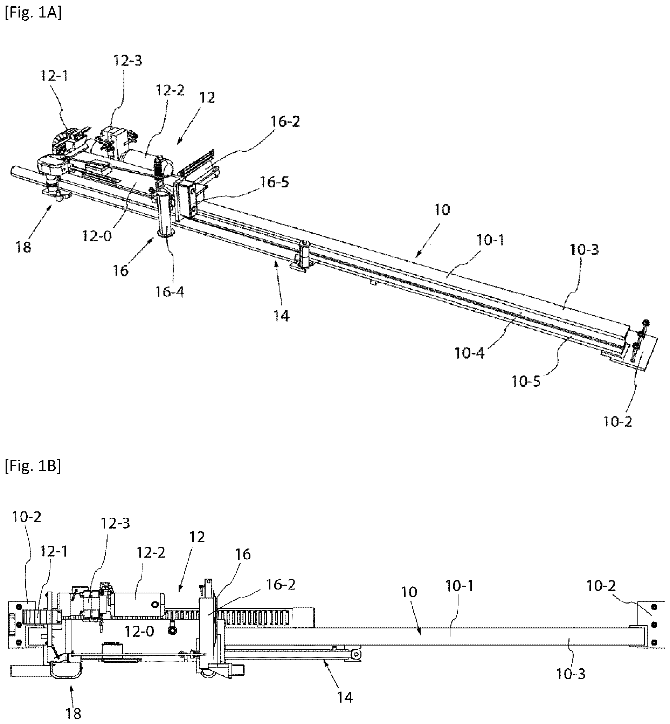

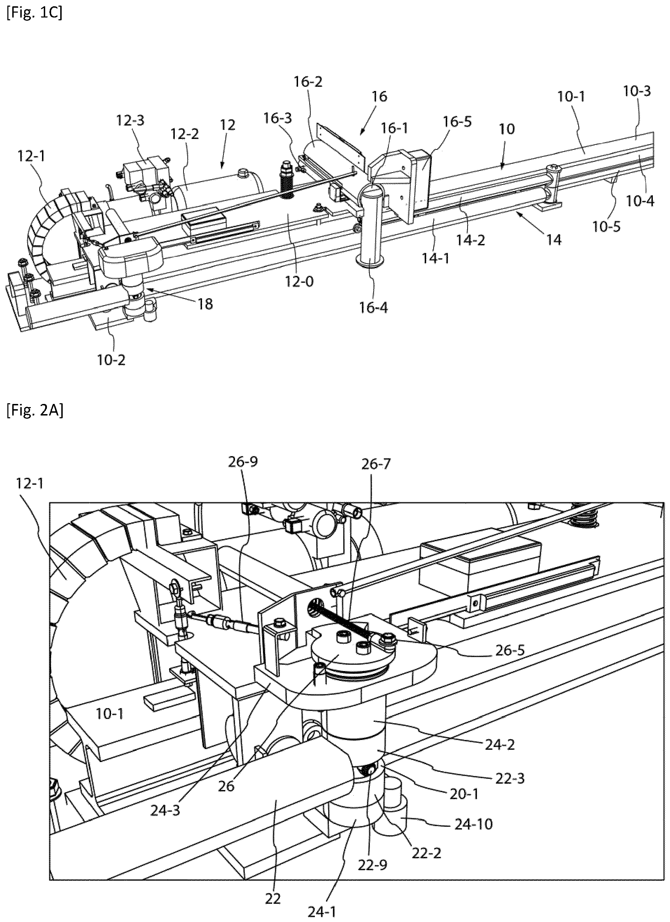

Le dispositif de blocage à bras selon la présente invention est illustré sur les différentes figures. Sur les figures 1A, 1B et 1C, on a représenté un bâti 10, rapporté au sol par tout moyen d'ancrage, en fonction de la nature du sol. Ce bâti 10 supporte un module de blocage 12, des moyens de manoeuvre 14 dudit module de blocage 12. Le module de blocage 12 comprend une tête de blocage 16 et une tête de positionnement 18.

Le bâti 10 comprend une poutre métallique 10-1 du type IPN, des platines 10-2 solidaires de ladite poutre métallique 10-1, ces platines étant ancrées au sol, au moins aux deux extrémités. La poutre est positionnée, de façon connue, parallèlement à la voie d'accès à un quai de chargement, non représenté, c'est-à-dire perpendiculairement au quai devant lequel le véhicule doit reculer et être immobilisé. La poutre métallique 10-1 comprend une section en I avec une aile supérieure 10-3, une âme centrale 10-4 et une aile inférieure 10-5.

Le module de blocage 12 comprend un châssis 12-0 apte à circuler en translation sur le bâti 10 et plus particulièrement sur la poutre métallique 10-1, des galets, non détaillés, positionnés sous les ailes permettent de maintenir un guidage. Le module de blocage 12 comprend une alimentation électrique 12-1, dans un chemin de câbles articulé, une pompe hydraulique 12-2 avec une bâche à huile hydraulique intégrée et un distributeur 12-3 de façon à alimenter de façon commandée les moyens de manoeuvre 14. Ces moyens de manoeuvre 14 comprennent, de façon connue, deux vérins 14-1 et 14-2 hydrauliques, l'un d'une longueur double de l'autre, alimentés par la pompe hydraulique 12-2, montés en tandem de façon à disposer d'une course longue inférieure à celle de la poutre métallique 10-1. Chaque vérin 14-1 et 14-2 comprend un corps et une tige susceptible de prendre une position maximale rétractée et une position en saillie par rapport audit corps. Le montage en tandem consiste à solidariser les deux extrémités des tiges des deux vérins, le corps du premier vérin sur le bâti 10 et le corps du second vérin sur le module de blocage 12. Le système est ainsi très compact mais avec une grande amplitude de translation.

La tête de blocage 16 selon la présente invention comprend un bras de blocage 16-1 du type barreau d'acier à section circulaire, en l'occurrence. Ce bras de blocage 16-1 est monté mobile en translation dans un fourreau 16-2, un tube en acier de section circulaire et de diamètre intérieur égal, au jeu près, au diamètre extérieur du bras de blocage. Le fourreau 16-2 et le bras de blocage 16-1 sont orientés perpendiculairement à la poutre métallique 10-1 du bâti 10, donc perpendiculairement à la direction de déplacement des véhicules. Le fourreau 16-2 est solidarisé au châssis 10-2, par exemple par soudure, de façon à bénéficier d'une liaison de forte résistance mécanique. Des moyens de manoeuvre 16-3 assurent les déplacements en translation du bras de blocage 16-1 dans ledit fourreau 16-2. Ces moyens de manoeuvre 16-3 sont constitués avantageusement d'un vérin hydraulique 16-4, également alimenté par la pompe hydraulique 12-2 et son distributeur. L'extrémité du fourreau 16-2, côté voie, se situe au droit du bord de la voie. Le bras de blocage 16-1 peut prendre deux positions, une première position d'attente, escamotée dans le fourreau 16-2, sans faire saillie, et une seconde position en saillie par rapport au fourreau 16-1, mais en conservant une partie de maintien à l'intérieur dudit fourreau 16-2. Avantageusement, l'extrémité libre du bras de blocage 16-1 porte un pied béquille 16-4, solidaire de l'extrémité du bras de blocage 16-1 et orienté verticalement, destiné à reposer sur le sol de la voie. Le pied béquille 16-4 est associé au châssis qui comprend des moyens de compensation 16-7. Ces moyens de compensation comprennent un ressort 16-8 et une tige traversante 16-9 munie d'un galet en partie inférieure (non représenté) destiné à coopérer avec le dessous de l'aile supérieure. Ainsi si le pied béquille est sollicité, il vient en appui au sol et dès que la pression de sollicitation est supprimée, alors le ressort 16-8 rappelle le châssis et soulève légèrement le pied béquille 16-4 qui ne touche plus le sol. En complément, des feux de signalisation 16-5 sont rapportés, de façon à être visibles du chauffeur, dans ses rétroviseurs.

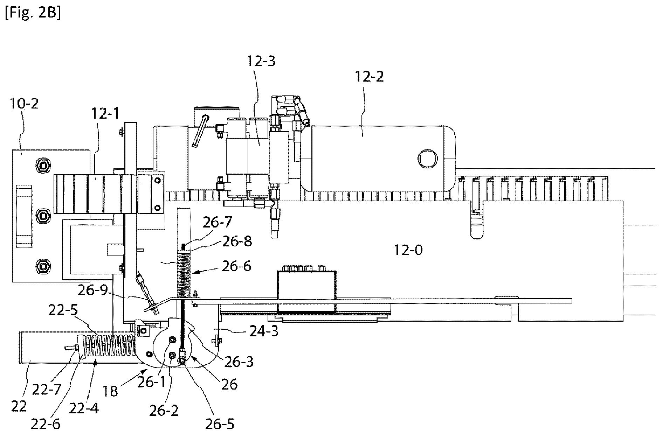

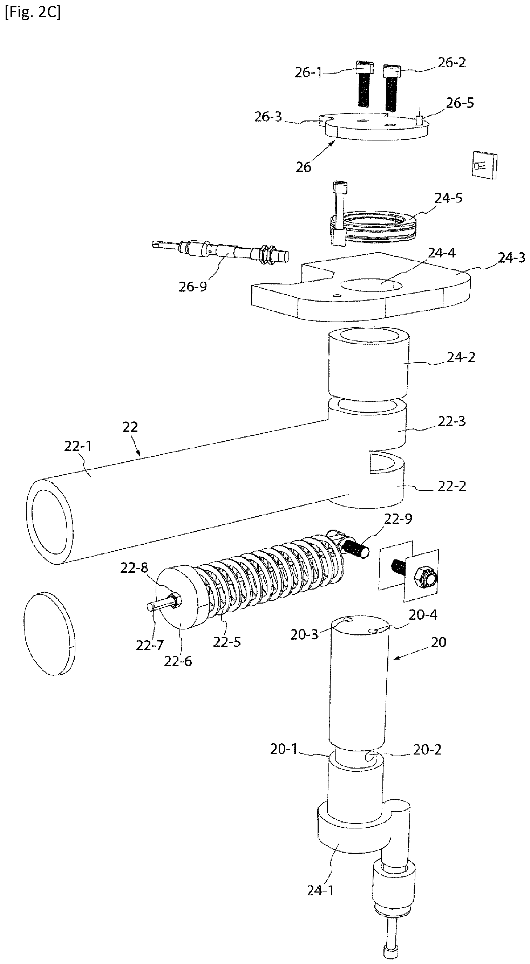

La tête de positionnement 18 est également montée sur le châssis 12-0. Cette tête est disposée du côté de la voie d'accostage, comme montré sur les figures 2A, 2B et 2C. Cette tête de positionnement comprend un axe central 20, de section cylindrique, muni d'une gorge 20-1 sensiblement dans sa partie médiane. Un perçage diamétral 20-2 est ménagé dans le fond de la gorge 20-1. Cet axe central 20 comporte également sur la face supérieure deux perçages taraudés 20-3 et 20-4, la ligne passant par ces deux perçages taraudés étant parallèle à l'axe du trou 20-2. Un bras de positionnement 22 est monté à rotation. Ce bras de positionnement 22 comprend un tube creux 22-1, en l'occurrence un tube de section cylindrique, dont une extrémité est libre et l'autre est solidarisée à deux bagues 22-2 et 22-3, disposées de façon coaxiale sur l'axe central 20, de part et d'autre de la gorge 20-1. Le bras de positionnement peut ainsi tourner librement autour de l'axe central 20. Des moyens de rappel angulaire 22-4 sont associés au bras de positionnement et intégrés audit bras de positionnement. En l'occurrence, ces moyens de rappel angulaire comprennent un ressort à spires 22-5 pris entre une butée 22-6 traversée elle-même par une tige traversante 22-7, munie d'un écrou de réglage 22-8 à une extrémité au-delà de la butée 22-6, et les bagues 22-2 et 22-3, l'autre extrémité de la tige étant retenue par un boulon 22-9 passant dans le trou 20-2 ménagé dans la gorge 20-1 de l'axe central 20. Ainsi, le ressort à spires 22-5 est tendu par la tige traversante 22-7 et a une tendance à être rappelé pour venir perpendiculairement à l'axe du trou 20-2. La vue éclatée de la figure 2C montre l'agencement en détail. L'agencement est complété par une bague de base 24-1 solidaire de l'axe central 20, par exemple par soudage, et portant une butée périphérique 24-10 prévue pour venir en butée contre le châssis 12-0. Une bague supérieure 24-2 assure le guidage de l'axe central 20 en partie haute, cette bague supérieure étant solidaire d'une platine 24-3, elle-même solidaire du châssis 12-0. L'axe central 20 passe à travers la bague supérieure 24-2 et à travers un trou 24-4, ménagé dans la platine 24-3. L'axe central 20 émerge au-dessus de la platine 24-3 et reçoit une rondelle anti-frottement 24-5. La section supérieure de l'axe central 20 reçoit une came 26, rapportée sur ladite section supérieure de l'axe central au moyen de deux vis 26-1 et 26-2, aptes à visser dans les perçages taraudés 20-3 et 20-4 ménagés dans l'axe central. La came 26 est un disque avec un secteur angulaire 26-3, en saillie périphériquement, au-delà de la périphérie dudit disque. Cette came 26 porte un pion 26-5, sur la périphérie extérieure. Ce pion 26-5 est lié de façon articulée à des moyens de rappel 26-6 comprenant une tige 26-7 et un ressort 26-8 monté à sa périphérie et venant sur une butée 26-8 solidaire du châssis 12-0 d'un côté et sur une butée solidaire de la tige 26-7 au moyen d'un écrou de réglage de la tension dudit ressort. Dans la position représentée, la tige 26-7 est sensiblement parallèle à la ligne joignant les deux vis 26-1 et 26-2. Un détecteur 26-9 complète l'agencement et détecte le passage du secteur angulaire 26-3 devant lui.

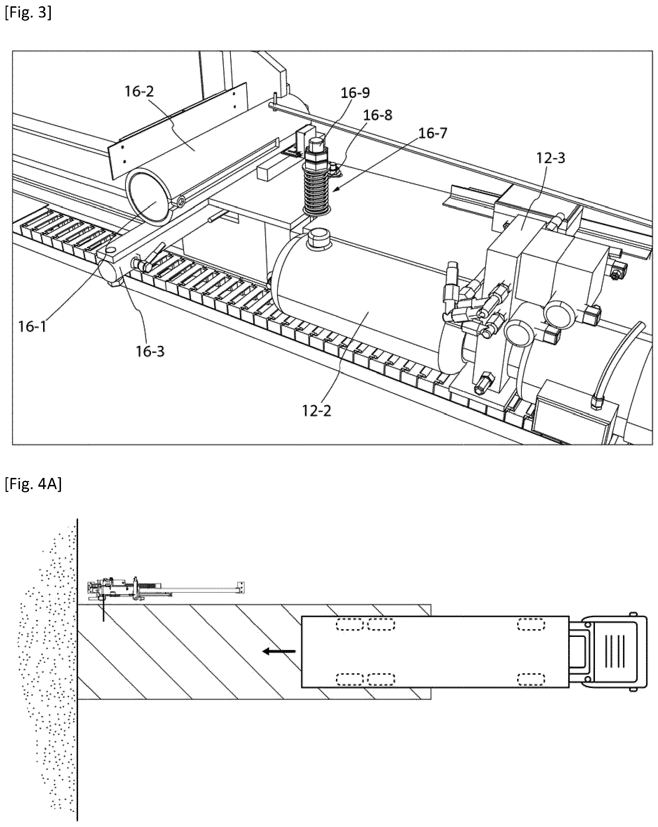

Sur la figure 3, on a représenté des moyens de compensation de jeu. En effet, lorsque le bras de blocage 16-1 vient en saillie par rapport au fourreau 16-2, le module de blocage 12 bascule vers la voie d'accostage. Le pied béquille 16-4 peut venir au contact de la surface de la voie d'accostage et dégrader la surface. De fait, un galet d'appui est monté sous l'aile 10-1 de la poutre métallique à une extrémité d'une tige 28-1 tandis que l'autre extrémité traverse un ressort d'appui 28-2 avec une butée 28-3 qui exerce un effort sur le châssis 12-0. Le châssis 12-0 est donc maintenu, dans la mesure du jeu, incliné du côté opposé à la voie d'accostage. Le bras de blocage 16-1 peut être translaté, sans accrochage du pied béquille 16-4.

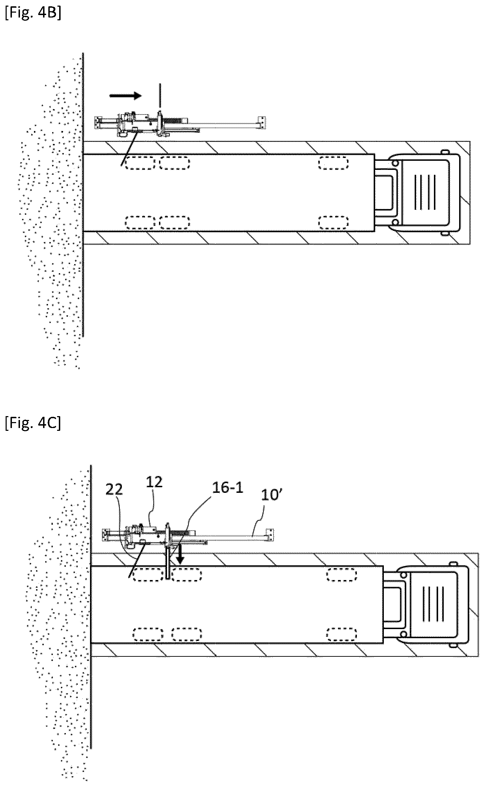

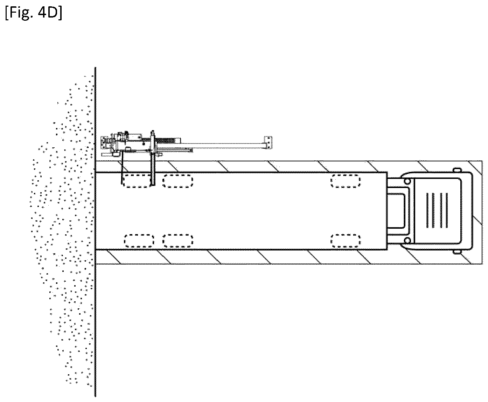

Le fonctionnement du dispositif de blocage d'un véhicule selon la présente invention est maintenant décrit lorsqu'un camion est à positionner dans la voie d'accostage et en butée contre un quai de chargement, ceci de façon connue. Le dispositif selon la présente invention est complété par des moyens de pilotage, non représentés, afin de conduire les différentes manoeuvres qui sont maintenant décrites dans le cadre du fonctionnement, illustré par les figures 4.

Le dispositif selon la présente invention est en position d'attente c'est-à-dire que le module 12 est reculé au plus proche du quai de chargement devant lequel doit venir accoster un véhicule, voir figure 4A. le véhicule ayant été accosté, le chauffeur attend la manoeuvre de blocage. Le module 12 se déplace le long du véhicule grâce aux moyens de déplacement 14 et détecte de façon connue la présence de roues. Le bras de blocage 16-1 est rétracté dans le fourreau 16-2. Le bras de positionnement 22 est perpendiculaire car le ressort 26-8 a rappelé la tige 26-7 en arrière et l'axe central est orienté avec le trou 20-2 orienté parallèlement à la voie d'accostage. Le secteur angulaire 26-3 de la came 26 a pivoté et se trouve en face du capteur 26-9 qui détecte l'orientation adaptée du bras de positionnement. La butée périphérique 24-10 est en appui sur le châssis 12-0. Lorsque le module avance, le bras de positionnement 22 entre en contact avec la roue arrière du véhicule, voir figure 4B. Le bras recule et pivote par rapport à l'axe central 20, le ressort 22-5 se comprime et la came en partie supérieure voit son secteur angulaire 26-3 sortir de la zone d'action du détecteur 26-9. Le module 12 est immobilisé. Le bras de blocage 16 est alors manoeuvré car le bras de positionnement et le bras de blocage sont distants d'une valeur égale au diamètre maximal d'un pneu des véhicules susceptibles d'accoster au quai. Une fois le bras de blocage 16-1 mis en saillie par manoeuvre du vérin 16-3, le pied repose au sol ou se trouve très légèrement au-dessus du sol, voir figure 4C. Le module 12 est alors reculé et le bras de blocage vient contre le pneu du véhicule tandis que le secteur angulaire 26-3 de la came 26 revient dans le champ du détecteur 26-3. Le module 12 est alors immobilisé et le véhicule est bloqué figure 4D. Les feux de signalisation au rouge durant toutes les manoeuvres restent au rouge indiquant que le véhicule est bloqué. Généralement, une liaison est assurée avec le mécanisme de la porte de quai avec des rappels lumineux et sonores sur le quai, ceci de façon connue. Lorsque le véhicule est chargé/déchargé, la manoeuvre inverse est réalisée et le feu ne passe au vert que lorsque le module 12 est de retour en position initiale et que l'opérateur de quai a validé l'opération. A cet effet, un capteur de position en translation du module 12 peut être avantageusement prévu.

Les avantages de ce dispositif sont nombreux. Le premier est de rendre encore plus résistant mécaniquement le bras de blocage car la béquille évite au bras de plier sous la composante verticale d'un effort exercé par la roue en cas de démarrage intempestif par exemple. De plus, lorsque le dispositif est resté dans une position avancée, par erreur, le véhicule qui recule va venir en butée contre le bras de positionnement, celui-ci peut alors venir sur l'arrière, à l'encontre de la force du ressort mais va s'escamoter, sans dégradation au recul du véhicule. Dès que la roue est passée, le bras de positionnement se remet perpendiculaire sous l'effort de rappel du ressort 22-5 disposé dans le tube 22-1 du bras. Dès lors, une fois une ou plusieurs roues passées, le chauffeur du véhicule peut comprendre qu'il y a un problème et avancer alors son véhicule. Le bras est alors poussé dans le sens opposé par la roue et là encore, le bras de positionnement pivote et échappe à toute dégradation mécanique en s'escamotant. On note que ceci est indépendant des ordres de commande qui pourraient être exercées, manuellement ou automatiquement. Dans tous les cas, le véhicule ne peut pas dégrader le bras de positionnement. La fiabilité du dispositif réside dans le montage qui n'utilise aucun élément motorisé mais de simples ressorts de rappel. Le bras de blocage est de faible encombrement grâce au montage en fourreau et au vérin disposé dans la longueur du fourreau comme cela est représenté sur les différentes figures.

## Revendications

1. Dispositif de blocage d'un véhicule devant un quai de chargement dans une voie d'accostage, ledit dispositif comprenant un bâti (10), un module de blocage (12) muni de moyens de manoeuvre (14) le long du bâti, ledit module de blocage (12) comprend un châssis (12-0) en translation supportant une tête de blocage (16) et un moyen de détection (18), dans lequel la tête de blocage comporte un bras de blocage (16-1) monté mobile sur le châssis entre une position d'attente et une position de blocage et des moyens de manoeuvre (16-3) agencés pour déplacer le bras de blocage vers la position d'attente ou la position de blocage, dans lequel le moyen de détection est agencé pour détecter l'arrière d'une roue dudit véhicule **caractérisé en ce qu'**il comporte une unité de contrôle agencée pour contrôler les moyens de manoeuvre du bras de blocage (16-3) de sorte à entraîner un déplacement du bras de blocage de la position d'attente vers la position de blocage en fonction de la détection de l'arrière de ladite roue dudit véhicule par le moyen de détection, et **caractérisé en ce qu'**il comporte un capteur optique supporté par le châssis entre la tête de blocage et le moyen de détection et agencé pour détecter l'avant de ladite roue dudit véhicule et **en ce que** l'unité de contrôle est agencée pour contrôler les moyens de manoeuvre du bras de blocage de sorte à entraîner un déplacement du bras de blocage de la position d'attente vers la position de blocage en fonction de la détection de l'arrière de ladite roue dudit véhicule par le moyen de détection et de la détection de l'avant de ladite roue dudit véhicule par le capteur optique.

2. Dispositif de blocage d'un véhicule devant un quai de chargement dans une voie d'accostage, selon la revendication 1, **caractérisé en ce que** la tête de blocage (16) comprend un bras de blocage (16-1), mobile en translation dans un fourreau (16-2), tous deux orientés perpendiculairement au bâti (10) et des moyens de manoeuvre du bras blocage (16-3) assurant les déplacements en translation du bras de blocage (16-1) dans ledit fourreau (16-2).

3. Dispositif de blocage d'un véhicule devant un quai de chargement dans une voie d'accostage, selon la revendication 2, **caractérisé en ce que** le bras de blocage (16-1) comprend un pied béquille (16-4), solidaire de l'extrémité dudit bras de blocage (16-1) et orienté verticalement, destiné à reposer sur le sol de la voie d'accostage.

4. Dispositif de blocage d'un véhicule devant un quai de chargement dans une voie d'accostage, selon la revendication 1, 2 ou 3, **caractérisé en ce que** le moyen de détection (18) est une tête de positionnement qui comprend un axe central (20), un bras de positionnement (22) monté pivotant autour dudit axe central, des moyens de rappel angulaire (22-4) dudit bras de positionnement perpendiculairement à la voie d'accostage, et une came (26) disposée en partie supérieure dudit axe central (20) avec un secteur angulaire (26-3) ainsi qu'un capteur (26-9).

5. Dispositif de blocage d'un véhicule devant un quai de chargement dans une voie d'accostage, selon la revendication 4, **caractérisé en ce que** les moyens de rappel angulaire (22-4) du bras de positionnement (22) comprennent un ressort à spires (22-5) pris entre une butée (22-6) traversée elle-même par une tige traversante (22-7), muni d'un écrou de réglage (22-8) à une extrémité au-delà de ladite butée (22-6), l'autre extrémité de la tige étant retenue par un boulon (22-9) passant dans un trou (20-2) ménagé dans une gorge (20-1) de l'axe central (20).

6. Dispositif de blocage d'un véhicule devant un quai de chargement dans une voie d'accostage, selon la revendication 4 ou 5, **caractérisé en ce que** la came (26) comprend des moyens de rappel angulaire (26-6) comprenant une tige (26-7) et un ressort (26-8) monté à sa périphérie et venant sur une butée (26-8) solidaire du châssis (12-0) d'un côté et sur une butée solidaire de la tige (26-7) au moyen d'un écrou de réglage de la tension dudit ressort.

7. Dispositif de blocage d'un véhicule devant un quai de chargement dans une voie d'accostage, selon l'une quelconque des revendications précédentes, **caractérisé en ce qu'**il comprend des moyens de compensation (16-7) comportant un ressort (16-8) et une tige traversante (16-9) munie d'un galet en partie inférieure, destiné à coopérer avec le châssis (12-0).

8. Dispositif de blocage d'un véhicule devant un quai de chargement dans une voie d'accostage, selon l'une des revendications précédentes, dans lequel, lors de l'accostage du véhicule, l'unité de contrôle est agencée pour contrôler les moyens de manoeuvre (14) du module de blocage (12) pour entraîner un déplacement du module de blocage dans un sens donné, puis en fonction de la détection de l'arrière de ladite roue dudit véhicule par le moyen de détection (18), pour contrôler ces moyens de manoeuvre pour entraîner un déplacement du module de blocage dans un sens opposé, et pour contrôler les moyens de manoeuvre (16-3) du bras de blocage de sorte à entrainer un déplacement du bras de blocage de la position d'attente vers la position de blocage à la suite de la détection de l'avant de ladite roue dudit véhicule par le capteur optique.

## Patentansprüche

1. Vorrichtung zum Blockieren eines Fahrzeugs vor einer Laderampe in einer Andockbahn, wobei die Vorrichtung ein Gestell (10) und ein Blockierungsmodul (12) mit Mitteln (14) zum Manövrieren entlang des Gestells umfasst, wobei das Blockierungsmodul (12) ein Verschiebungsfahrgestell (12-0) umfasst, das einen Blockierungskopf (16) und ein Detektionsmittel (18) trägt, wobei der Blockierungskopf einen Blockierungsarm (16-1), der auf dem Fahrgestell zwischen einer Warteposition und einer Blockierungsposition beweglich montiert ist, und Manövriermittel (16-3), die eingerichtet sind, um den Blockierungsarm in die Warteposition oder die Blockierungsposition zu bewegen, umfasst, wobei das Detektionsmittel eingerichtet ist, um den hinteren Teil eines Rades des Fahrzeugs zu detektieren, **dadurch gekennzeichnet, dass** sie eine Steuereinheit umfasst, die eingerichtet ist, um die Mittel zum Manövrieren des Blockierungsarms (16-3) derart zu steuern, dass sie eine Bewegung des Blockierungsarms von der Warteposition in die Blockierungsposition in Abhängigkeit der Detektion des hinteren Teils des Rades des Fahrzeugs durch das Detektionsmittel herbeiführen, und **dadurch gekennzeichnet, dass** sie einen optischen Sensor umfasst, der von dem Fahrgestell zwischen dem Blockierungskopf und dem Detektionsmittel getragen wird und eingerichtet ist, um den vorderen Teil des Rades des Fahrzeugs zu detektieren, und dass die Steuereinheit eingerichtet ist, um die Mittel zum Manövrieren des Blockierungsarms derart zu steuern, dass sie eine Bewegung des Blockierungsarms von der Warteposition in die Blockierungsposition in Abhängigkeit von der Detektion des hinteren Teils des Rades des Fahrzeugs durch das Detektionsmittel und von der Detektion des vorderen Teils des Rades des Fahrzeugs durch den optischen Sensor herbeiführen.

2. Vorrichtung zum Blockieren eines Fahrzeugs vor einer Laderampe in einer Andockbahn nach Anspruch 1, **dadurch gekennzeichnet, dass** der Blockierungskopf (16) einen Blockierungsarm (16-1), der in einer Gleithülse (16-2) verschiebbar ist, wobei beide rechtwinklig zu dem Gestell (10) orientiert sind, und Mittel zum Manövrieren des Blockierungsarms (16-3), welche die Verschiebungsbewegungen des Blockierungsarms (16-1) in der Gleithülse (16-2) sicherstellen, umfasst.

3. Vorrichtung zum Blockieren eines Fahrzeugs vor einer Laderampe in einer Andockbahn nach Anspruch 2, **dadurch gekennzeichnet, dass** der Blockierungsarm (16-1) einen Stützfuß (16-4), der mit dem Ende des Blockierungsarms (16-1) fest verbunden ist und senkrecht orientiert ist, zum Abstellen auf dem Boden der Andockbahn umfasst.

4. Vorrichtung zum Blockieren eines Fahrzeugs vor einer Laderampe in einer Andockbahn nach Anspruch 1, 2 oder 3, **dadurch gekennzeichnet, dass** das Detektionsmittel (18) ein Positionierungskopf ist, der eine mittlere Achse (20), einen Positionierungsarm (22), der um die mittlere Achse herum schwenkbar montiert ist, Mittel (22-4) zum angewinkelten Zurückstellen des Positionierungsarms rechtwinklig zur Andockbahn, und eine Kurvenscheibe (26), die im oberen Teil der mittleren Achse (20) mit einem Winkelsektor (26-3) angeordnet ist, sowie einen Sensor (26-9) umfasst.

5. Vorrichtung zum Blockieren eines Fahrzeugs vor einer Laderampe in einer Andockbahn nach Anspruch 4, **dadurch gekennzeichnet, dass** die Mittel (22-4) zum angewinkelten Zurückstellen des Positionierungsarms (22) eine Schraubenfeder (22-5) umfassen, die durch einem Anschlag (22-6) gehalten wird, der selber von einem Durchgangsstab (22-7) durchquert wird, der mit einer Stellmutter (22-8) an einem Ende über den Anschlag (22-6) hinaus versehen ist, wobei das andere Ende des Stabs von einem Bolzen (22-9) festgehalten wird, der durch ein Loch (20-2) geht, das in einer Auskehlung (20-1) der mittleren Achse (20) vorgesehen ist.

6. Vorrichtung zum Blockieren eines Fahrzeugs vor einer Laderampe in einer Andockbahn nach Anspruch 4 oder 5, **dadurch gekennzeichnet, dass** die Kurvenscheibe (26) Mittel (26-6) zur angewinkelten Rückstellung umfasst, die einen Stab (26-7) und eine Feder (26-8), die an seiner Peripherie montiert ist und an einem Anschlag (26-8), der an einer Seite mit dem Fahrgestell (12-0) fest verbunden ist, und an einem Anschlag, der mit dem Stab (26-7) anhand einer Mutter zum Einstellen der Spannung der Feder fest verbunden ist, anstößt, umfassen.

7. Vorrichtung zum Blockieren eines Fahrzeugs vor einer Laderampe in einer Andockbahn nach einem der vorhergehenden Ansprüche, **dadurch gekennzeichnet, dass** sie Kompensationsmittel (16-7) umfasst, die eine Feder (16-8) und einen Durchgangsstab (16-9), der mit einer Rolle im unteren Teil zum Zusammenwirken mit dem Fahrgestell (12-0) versehen ist, umfassen.

8. Vorrichtung zum Blockieren eines Fahrzeugs vor einer Laderampe in einer Andockbahn nach einem der vorhergehenden Ansprüche, wobei beim Andocken des Fahrzeugs die Steuereinheit eingerichtet ist, um die Mittel (14) zum Manövrieren des Blockierungsmoduls (12) zu steuern, um eine Bewegung des Blockierungsmoduls in einer bestimmten Richtung herbeizuführen, und um dann in Abhängigkeit von der Detektion des hinteren Teils des Rades des Fahrzeugs durch das Detektionsmittel (18) diese Manövriermittel zu steuern, um eine Bewegung des Blockierungsmoduls in einer entgegengesetzten Richtung herbeizuführen, und um die Mittel (16-3) zum Manövrieren des Blockierungsarms derart zu steuern, dass sie eine Bewegung des Blockierungsarms von der Warteposition in die Blockierungsposition nach dem Detektieren des vorderen Teils des Rades des Fahrzeugs durch den optischen Sensor herbeiführen.

## Claims

1. A device for blocking a vehicle in front of a loading dock in a docking lane, said device comprising a frame (10), a blocking module (12) which is provided with operating means (14) along the frame, said blocking module (12) comprising a translational carriage (12-0) which supports a blocking head (16) and a detection means (18), wherein the blocking head comprises a blocking arm (16-1) which is movably mounted on the carriage between a standby position and a blocking position and operating means (16-3) which are designed to move the blocking arm toward the standby position or the blocking position, the detection means being designed to detect the rear of a wheel of said vehicle, **characterized in that** it comprises a control unit which is designed to control the blocking arm operating means (16-3) so as to cause a movement of the blocking arm from the standby position to the blocking position as a function of the detection of the rear of said wheel of said vehicle by the detection means, and **characterized in that** it comprises an optical sensor which is supported by the carriage between the blocking head and the detection means and designed to detect the front of said wheel of said vehicle and **in that** the control unit is designed to control the blocking arm operating means so as to cause a movement of the blocking arm from the standby position toward the blocking position as a function of the detection of the rear of said wheel of said vehicle by the detection means and the detection of the front of said wheel of said vehicle by the optical sensor.

2. The device for blocking a vehicle in front of a loading dock in a docking lane according to claim 1, **characterized in that** the blocking head (16) comprises a blocking arm (16-1) which can be moved translationally in a sleeve (16-2), both oriented perpendicularly to the frame (10), and blocking arm operating means (16-3), ensuring the translational movements of the blocking arm (16-1) in said sleeve (16-2).

3. The device for blocking a vehicle in front of a loading dock in a docking lane according to claim 2, **characterized in that** the blocking arm (16-1) comprises a vertically oriented crutch foot (16-4) which is secured to the end of said blocking arm (16-1) and designed to rest on the ground of the docking lane.

4. The device for blocking a vehicle in front of a loading dock in a docking lane according to claim 1, 2, or 3, **characterized in that** the detection means (18) is a positioning head which comprises a central axle (20), a positioning arm (22) which is mounted so as to pivot about said central axle, means (22-4) for the angular retraction of said positioning arm perpendicular to the docking lane, and a cam (26) which is arranged in the upper portion of said central axle (20) with an angular sector (26-3) as well as a sensor (26-9).

5. The device for blocking a vehicle in front of a loading dock in a docking lane according to claim 4, **characterized in that** the means (22-4) for the angular retraction of the positioning arm (22) comprise a coil spring (22-5) held between a stop (22-6) that is itself traversed by a through rod (22-7) which is provided with an adjustment nut (22-8) at one end beyond said stop (22-6), the other end of the rod being retained by a bolt (22-9) which passes through a hole (20-2) formed in a groove (20-1) of the central axle (20).

6. The device for blocking a vehicle in front of a loading dock in a docking lane according to claim 4 or 5, **characterized in that** the cam (26) comprises angular retraction means (26-6) comprising a rod (26-7) and a spring (26-8) which is mounted on the periphery thereof and coming to bear on a stop (26-8) that is secured to the carriage (12-0) on one side and on a stop that is secured to the rod (26-7) by means of a nut for adjusting the tension of said spring.

7. The device for blocking a vehicle in front of a loading dock in a docking lane according to any one of the preceding claims, **characterized in that** it comprises compensation means (16-7) comprising a spring (16- 8) and a through rod (16-9) which is provided with a roller in the lower portion designed to cooperate with the carriage (12-0).

8. The device for blocking a vehicle in front of a loading dock in a docking lane according to any one of the preceding claims, wherein, during the docking of the vehicle, the control unit is designed to control the operating means (14) of the blocking module (12) so as to cause movement of the blocking module in a given direction, and then, as a function of the detection of the rear of said wheel of said vehicle by the detection means (18), to control these operating means so as to cause a movement of the blocking module in an opposite direction, and to control the operating means (16-3) of the blocking arm so as to cause a movement of the blocking arm from the standby position toward the blocking position following the detection of the front of said wheel of said vehicle by the optical sensor 1.
